# EUROPEAN PATENT APPLICATION

(11) **EP 4 570 851 A1**
(43) Date of publication of application: **18.06.2025**
(21) Application number: 23852176.9
(22) Date of filing: 20.04.2023
(51) Int. Cl.: C08J 11/10

(54) **RESIN DECOMPOSITION TREATMENT METHOD AND DECOMPOSITION TREATMENT DEVICE**

(30) Priority: 08.08.2022 JP 2022126497
(71) Applicant: The Japan Steel Works, Ltd., Tokyo 141-0032 (JP)
(72) Inventor: IMAIDA, Tessei, Tokyo 141-0032 (JP); SAGA, Daigo, Tokyo 141-0032 (JP); UNEDA, Hiroshi, Tokyo 141-0032 (JP)
(74) Representative: Simmons & Simmons LLP (Munich)
(86) International application number: PCT/JP2023/015797
(87) International publication number: WO 2024/034190

(57) **Abstract**

A decomposition method and a decomposition apparatus for resin capable of safely and efficiently decomposing a resin are provided. A decomposition apparatus for resin 10 includes: a cylinder 12; a resin supplier 11 supplying a thermoplastic resin to the cylinder 12; a screw 12a transporting the supplied thermoplastic resin and a melt-plasticized thermoplastic resin; a fluid supplier 13 supplying a heated and pressurized fluid into the cylinder in order to decompose the melt-plasticized thermoplastic resin in a subcritical state or a supercritical state; an extruder 14 provided at a tip of the cylinder 12 and discharging a decomposed product of the thermoplastic resin to outside of the cylinder; a rotary drive mechanism 15 rotationally driving the screw 12a; and a cooling mechanism 16 being capable of cooling the cylinder 12.

## Description

### TECHNICAL FIELD

The present invention relates to a decomposition method and a decomposition apparatus for resin.

### BACKGROUND ART

Currently, plastic products are used in a very wide range of fields, and a use amount of the plastic products is enormous. On the other hand, the disposal of the plastic products costs money, and there is a problem of their influence on environment due to the flow of their components into rivers, seas and the like, when, for example, they are left in the natural environment.

For this reason, effective use of various resins as resources by recycling has been variously studied, and a method of, for example, collecting and reusing monomers obtained by thermally decomposing acrylic resin under use of a twin-screw extruder has been known (see, for example, Patent Document 1).

Also, in recent years, a method of obtaining monomers by exposing such a resin to a fluid of a subcritical state or a supercritical state has also been studied as a decomposition method for resin.

### RELATED ART DOCUMENT

### PATENT DOCUMENT

Patent Document 1: Japanese Patent Application Laid-open Publication No. H11 (1999)-106427

### SUMMARY OF THE INVENTION

### PROBLEMS TO BE SOLVED BY THE INVENTION

Incidentally, under use of the subcritical state or the supercritical state, predetermined temperature and pressure need to be set depending on the liquid (fluid) to be used. Since the conditions are usually high temperature and high pressure, a sealed apparatus or the like is considered as a decomposition apparatus used for such applications.

On the other hand, to prepare a decomposition apparatus durable against such a subcritical state or a supercritical state, it initially costs much since, for example, a dedicated apparatus must be fabricated, and a total processing cost is made high.

Accordingly, an object of the present invention is to provide a decomposition method and a decomposition apparatus for resin being capable of efficiently decomposing a resin in order to promote the recycling of the resin as described above.

Other issues and novel characteristics will be apparent from the description of the present specification and the accompanying drawings.

### MEANS FOR SOLVING THE PROBLEMS

According to one embodiment disclosed in the present application, a decomposition method for resin includes: a step (a) of supplying a thermoplastic resin from a resin supplier to a cylinder; a step (b) of heating and pressurizing and then melt-plasticizing the supplied thermoplastic resin in the cylinder; a step (c) of supplying a heated and pressurized fluid from a fluid supplier to the melt-plasticized thermoplastic resin and mixing them; a step (d) of decomposing the melt-plasticized thermoplastic resin by exposing the melt-plasticized thermoplastic resin to a subcritical state or a supercritical state by the supplied fluid; and a step (e) of extruding a decomposed product of the thermoplastic resin obtained in the step (d) from an extruder provided at a tip of the cylinder.

Here, in this decomposition method, the cylinder is cooled between the resin supplier and the fluid supplier by a coolant.

According to one embodiment disclosed in the present application, a decomposition apparatus for resin includes: a cylinder; a resin supplier supplying a thermoplastic resin to be decomposed to the cylinder; a screw transporting the supplied thermoplastic resin and a melt-plasticized thermoplastic resin in the cylinder; a fluid supplier supplying a heated and pressurized fluid into the cylinder in order to decompose the melt-plasticized thermoplastic resin in a subcritical state or a supercritical state; an extruder provided at a tip of the cylinder and extruding a decomposed product of the thermoplastic resin to outside of the cylinder; and a cooling mechanism arranged between the resin supplier and the fluid supplier and being capable of cooling the cylinder.

### EFFECTS OF THE INVENTION

One embodiment disclosed in the present application can provide a decomposition method and a decomposition apparatus for resin to be efficiently performed.

### BRIEF DESCRIPTIONS OF THE DRAWINGS

[FIG. 1] is a side view showing a schematic configuration of a decomposition apparatus for resin in a first embodiment.
[FIG. 2] is diagram in a side view for explaining a screw disposed in a cylinder of the decomposition apparatus of FIG. 1.
[FIG. 3] is a diagram for explaining a state of occurrence of backflow in the decomposition apparatus of FIG. 1.
[FIG. 4] is a diagram for explaining a state of occurrence of backflow in the decomposition apparatus of FIG. 1.
[FIG. 5] is a flowchart for explaining an operation of the decomposition apparatus for resin in the first embodiment.
[FIG. 6] is a perspective view showing a schematic configuration of a safety hopper attachable to a resin supplier.
[FIG. 7] is a diagram for explaining a relation in cross-sectional size between a lower-end opening and a cover on a horizontal surface of the lower-end opening.

### DETAILED DESCRIPTION OF PREFERRED EMBODIMENTS

Hereinafter, embodiments will be described in detail with reference to examples and drawings. Note that components having the same function are denoted by the same or similar reference symbols throughout all the drawings for describing the embodiments, and the repetitive description thereof will be omitted.

### <Background of Study>

First, the background of the study of the present application will be explained.

For the decomposition of the resin by the fluid of the subcritical state or the supercritical state as described above, a sealed process container durable against the process conditions is prepared in many cases. However, for the decomposition of resin, the present inventors have studied a possibility of use of a resin extruder used for forming resin materials.

That is, the present inventors have considered a possibility that the resin can be continuously and efficiently decomposed by using such a resin extruder, without preparing a special process container for the decomposition of resin but with using an existing extruder that remains unchanged or with slight modifications suitable for the decomposition.

In the extruder, generally, the thermoplastic resin as a raw material is supplied from one end of a tubular cylinder, and is gradually heated and kneaded in the cylinder, and then, the melt-plasticized resin is transported by a screw. Then, the melt-plasticized resin is sufficiently kneaded during the transportation in the cylinder, and is extruded as a uniformly mixed resin material from a die provided at a tip of the cylinder. An inner condition of the cylinder is a heated and pressurized condition, and therefore, even in the decomposition of resin, it has been assumed that the decomposition can be performed under use of the apparatus that remains unchanged by mixing the resin with the fluid of the subcritical state or the supercritical state in the cylinder.

As an actual result of the decomposition of resin under such conditions tried by the present inventors, it was confirmed that the subcritical state can be maintained in the cylinder and that the resin can be also decomposed.

However, continuation of this decomposition often caused backflow and spout of the melt-plasticized resin and the not-melted resin as yet from the resin supplier of the extruder. It is thought that this is because the resin supplier side of the extruder is usually not closed and is open to the atmosphere, and therefore, the pressure of the melt-plasticized molten resin in the cylinder becomes larger than the pressure of the not-melted resin as yet on the resin supplier side.

Accordingly, the present inventors have variously studied to provide a decomposition apparatus that can safely and continuously decompose the resin without occurrence of the backflow of the melt-plasticized resin even in the decomposition of resin in the subcritical state under the use of the extruder, and the present inventors have found a decomposition method and a decomposition apparatus for resin that can suppress the occurrence of the backflow. The decomposition method and the decomposition apparatus for resin in the present embodiment will be explained in detail below.

### <Embodiment>

### [Decomposition Apparatus for Resin]

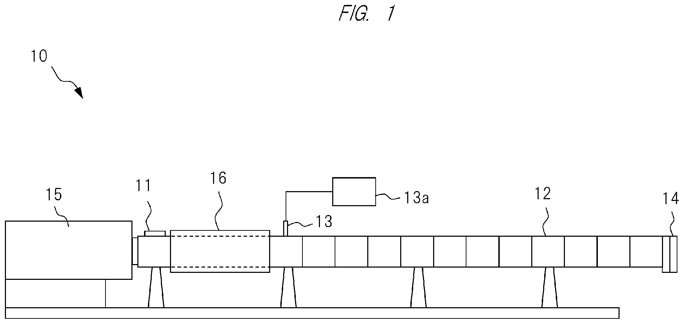

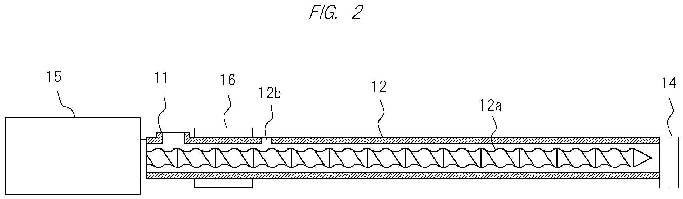

FIG. 1 is a diagram showing a configuration example of a decomposition apparatus for resin in the present embodiment. FIG. 2 is a diagram in a side view for explaining a screw disposed in a cylinder of the decomposition apparatus for resin shown in FIG. 1.

A decomposition apparatus for resin 10 shown in FIG. 1 is an apparatus used to decompose a resin to be decomposed by exposing the resin to a fluid of a subcritical state or a supercritical state.

The decomposition apparatus for resin 10 includes a resin supplier 11, a cylinder 12 with a screw, a fluid supplier 13 supplying a fluid to the cylinder 12, an extruder 14, a rotary drive mechanism 15 driving the screw of the cylinder 12, and a cooling mechanism 16.

The resin supplier 11 supplies the resin to be decomposed to the cylinder 12. In the present embodiment, a thermoplastic resin is supplied as the resin to be decomposed. The thermoplastic resin to be used and supplied is of a various form such as a pellet, powder, and a flake, and is fed from above into the resin supplier 11 including a hopper by, for example, a feeder or the like, and is supplied into the cylinder 12. A case of the pellet as the thermoplastic resin to be supplied will be exemplified and explained below.

The cylinder 12 includes a screw 12a inside. FIG. 2 is a diagram in a cross-sectional view of the cylinder 12 so that the internal structure of the cylinder 12 of the decomposition apparatus for resin 10 in FIG. 1 is viewable. In the cylinder 12 in FIG. 2, a fluid supply hole 12b where the fluid supplier 13 is disposed is also illustrated.

By rotating the screw 12a, the supplied resin is gradually transported inside the cylinder 12 toward the extruder 14 (downstream side). A twin-screw extruder can be configured by using a twin screw having two screws as the screw 12a. The twin-screw extruder has the flexibility to freely change operating conditions such as a screw rotation speed and a barrel setting temperature, and also has various advantages such as high transportability and continuous processability.

The cylinder 12 is made of, for example, connection of a plurality of cylinder blocks, and each cylinder block includes a space through which the thermoplastic resin can be transported. The screw 12a is provided in this space, and the screw 12a is connected to the rotary drive mechanism 15. The screw 12a is rotated by the rotary drive mechanism 15 to transport the resin to be decomposed in the cylinder 12.

Also, the cylinder 12 is provided with a heater so that its temperature can be adjusted. During the transportation of the thermoplastic resin to be decomposed from the resin supplier 11 toward the extruder 14, the thermoplastic resin is gradually heated by the above-described heater, thereby easily providing the melt-plasticized thermoplastic resin. Also, the melt-plasticized thermoplastic resin provided as described above can easily be transported in the cylinder 12 and is further transported toward the downstream side.

Also, the molten resin in the cylinder 12 and the fluid supplied from the fluid supplier 13 are pressurized by the screw 12a to reach the subcritical state or the supercritical state.

By supply of the fluid from the fluid supplier 13 described later during the process, the melt-plasticized thermoplastic resin and the fluid are mixed, and at this time, the inside of the cylinder 12 is adjusted to predetermined temperature and pressure by the heater and the screw provided in the cylinder 12 as described above, and therefore, the subcritical state or the supercritical state is achieved. Then, during further transportation in the cylinder 12 in the subcritical state or supercritical state, the decomposition of the thermoplastic resin is advanced.

The fluid supplier 13 supplies the heated and pressurized fluid into the cylinder 12. The fluid supplier 13 is disposed so that the thermoplastic resin is melt-plasticized in the cylinder 12 and then is supplied into the cylinder 12.

By the fluid supplied from the fluid supplier 13, on its downstream side, the melt-plasticized thermoplastic resin is decomposed when being exposed to the fluid of the subcritical state or the supercritical state. Note that it is only necessary that the subcritical state or the supercritical state of the fluid supplied from the fluid supplier 13 is achieved in the cylinder 12, and the fluid does not need to be of the subcritical state or the supercritical state immediately before being supplied to the cylinder 12. However, if the fluid to be supplied is put into the subcritical state or the supercritical state before being supplied to the cylinder 12 and then is supplied into the cylinder 12 while maintaining this state, the decomposition of the melt-plasticized thermoplastic resin starts immediately after the fluid is supplied, and therefore, this state is preferable.

The fluid is added to the melt-plasticized thermoplastic resin as described above. Since the inside of the cylinder 12 at the time of the addition is heated and pressurized, the fluid supplied at this time is supplied into the cylinder 12 while being against the pressure. That is, this fluid is supplied from the fluid supplier 13 into the cylinder 12 while being pressurized to have a pressure larger than a pressure in the cylinder 12 provided with the fluid supplier 13.

Also, since the fluid is put into the subcritical state or the supercritical state after being supplied as described above, a temperature of the fluid to be supplied is preferably equal to or higher than a temperature of the melt-plasticized thermoplastic resin in the fluid supplier 13.

Therefore, the fluid supplier 13 is preferably provided with a heating means that can put the fluid to be supplied into a predetermined heated state. For example, FIG. 1 shows a diagram in which the fluid supplier 13 is connected to a heated-water production apparatus 13a. It is sufficient to produce the fluid of the predetermined heated state by using the heated-water production apparatus 13a as described above, and then, supply the resultant fluid from the fluid supplier 13 into the cylinder 12 through a pipe by using a pump such as a plunger pump.

The extruder 14 is a member that discharges, to the outside of the decomposition apparatus 10, the decomposed of the thermoplastic resin transported through the cylinder 12, and has a hole for extrusion or an extrusion opening aperture. The extruder 14 may be configured to allow the decomposed product to be discharged to the outside while maintaining the pressure in the apparatus.

Note that the extruder 14 may be connected to a container for collecting the raw material, or may be connected to a different process apparatus so that the extruded decomposed product of the thermoplastic resin is further subjected to a predetermined process.

The rotary drive mechanism 15 is an apparatus for rotating the screw 12a provided inside the cylinder 12. The thermoplastic resin to be decomposed is transported through the cylinder 12 by the screw rotated by the rotary drive mechanism 15.

Note that either a twin-screw extruder provided with two screws in the cylinder 12 or a single-screw extruder provided with a single screw is applicable. In the case of the twin-screw extruder, the two screws are rotated while being in parallel with each other. The two shafts may be disposed to mesh with or not to mesh with each other. When the number of screws is two, the twin screw with two screws is more preferable than the single screw with one screw if a screw bore diameter is the same, because of causing the high extrusion amount due to the high transportation efficiency of the raw material and the high kneading performance. Also, an extending direction of the cylinder 12 is the same as an extending direction of the screw(s) inside the cylinder 12.

In the present embodiment, the cooling mechanism 16 cools a predetermined region of the cylinder 12. The cooling mechanism 16 is disposed on an outer circumference of the cylinder 12 so as to cool a space between the resin supplier 11 and the fluid supplier 13.

As the cooling mechanism 16, a publicly-known cooling mechanism is applicable if this can cool the outer circumference of the cylinder 12, and a cooler jacket provided on the outer circumference of the cylinder 12 is exemplified. The exemplified cooler jacket is connected to a chiller (that is a coolant circulating apparatus) that can always circulate/supply a coolant with a predetermined temperature in/into this cooler jacket to cool the cylinder 12 to a predetermined temperature.

By this cooling mechanism 16, a region of the outer circumference of the cylinder 12 close to the resin supplier 11 can be cooled, and therefore, the supplied thermoplastic resin and the melt-plasticized thermoplastic resin can be cooled in the region close to the resin supplier 11, and the pressure in the cylinder 12 can be reduced. Therefore, in the cylinder 12, the backflow such as the spout of the melt-plasticized thermoplastic resin from the resin supplied 11 can be suppressed.

### <Decomposition Method for Resin>

Next, each step of the decomposition method for resin in the present embodiment will be described while exemplifying the case of using the above-described decomposition apparatus for resin 10 in FIG. 1.

First, the thermoplastic resin is supplied from the resin supplier 11 to the cylinder 12 (step (a): resin supply step). In this step, the thermoplastic resin to be decomposed is supplied into the cylinder 12 which is the body of the decomposition apparatus.

Note that the resin product to be decomposed and supplied here is not particularly limited as long as it is made of thermoplastic resin. As the types of resins, for example, polyamide (PA) resin, polycarbonate (PC) resin, polyethylene terephthalate (PET) resin, polybutylene terephthalate (PBT) resin or the like is exemplified. Particularly, nylon resin is preferable.

Next, the supplied thermoplastic resin is heated and pressurized in the cylinder 12, and is melt-plasticized (step (b): melt-plasticizing step). Here, the thermoplastic resin supplied in the above resin supply step is heated and pressurized while being transported in the cylinder 12 toward the extruder 15 by the screw 12a.

Here, the thermoplastic resin is gradually heated to a high temperature by the heater provided on the outer circumference of cylinder 12 while being transported, and the thermoplastic resin is gradually pressurized by a pressurizing pump capable of pressurizing the inside of the cylinder 12 while being transported. The thermoplastic resin that is melt-plasticized by the heating and the pressurization as described above can be easily transported by the screw 12a.

Although depending on the resin type to be used, it is preferable to heat and pressurize the thermoplastic resin under conditions of, for example, the resin temperature that is 250°C to 400°C and the resin pressure that is 15 to 22 MPa before the fluid supply step described next. By immediately before the fluid supply step, the conditions preferably reach 150 to 250°C and 15 to 20 MPa. More specifically, if the nylon resin is included as the resin to be decomposed, for example, the resin temperature preferably reaches to 300°C to 350°C, and the resin pressure preferably reaches to 15 to 18 MPa.

Next, the heated and pressurized fluid is supplied from the fluid supplier 13 to the melt-plasticized thermoplastic resin in the cylinder 12 (step (c): fluid supply step). The fluid supplied here is mixed with the melt-plasticized thermoplastic resin.

The fluid supplied at this time to be exemplified is a fluid such as water or alcohol such as methanol that can be put into the subcritical state or the supercritical state in order to decompose the melt-plasticized resin, and water is preferable. The supercritical state indicates a state with activity that is an intermediate state between liquid and gas in a region beyond the critical point of the liquid, while the subcritical state indicates a liquid phase state with activity in a slightly lower region than that of the supercritical state.

The conditions for the subcritical state and supercritical state vary depending on the fluid to be used. In the case of water, for the subcritical state, for example, the pressure is enough to be equal to or higher than the saturation pressure at 150 to 350°C (such as the saturation pressure of 8.59 MPa at 300°C, or the saturation pressure of 16.54 MPa at 350°C). For the supercritical state, for example, the temperature is enough to be equal to or higher than 374°C, and the pressure is enough to be equal to or higher than 22 MPa.

Here, the fluid may be put into the subcritical state or the supercritical state even before or after being supplied to the melt-plasticized thermoplastic resin. In this fluid supply step, the heating and pressurization states are adjusted so that the fluid to be supplied meets the desired conditions. Note that it is preferable to put the fluid into the subcritical state or the supercritical state before being supplied thereto, and then, to supply the fluid into the cylinder 12. In this manner, by the supply of the fluid into the cylinder 12, the melt-plasticized thermoplastic resin is mixed with the fluid, and the decomposition can be started at the same time as the mixing.

Then, after the supply of the fluid, the thermoplastic resin melt-plasticized in the cylinder 12 is mixed with the fluid of the subcritical state or the supercritical state, and therefore, is decomposed (step (d): decomposition step). This decomposition step is preferably performed for a time period during which the thermoplastic resin is sufficiently decomposed, and, as for this, the time of mixing with the fluid of the subcritical state or the supercritical state can be adjusted by a length of the cylinder 12 and a transporting speed caused by a rotation of the screw 12a or the like.

The time period for the above decomposition is, for example, preferably 2 to 5 minutes, more preferably 5 to 10 minutes, and even more preferably 10 to 15 minutes.

The thermoplastic resin exposed to the subcritical state or the supercritical state as described above is cut at its bond, and then, becomes the decomposed product of the resin that has been decomposed (depolymerized) to be a monomer that is the raw material.

Then, the decomposed product of the thermoplastic resin obtained in the decomposition step is extruded from the extruder 14 provided at the tip of the cylinder 12 (step (e): extrusion step). The decomposed and extruded resin product is collected. This decomposed product can be reused as the raw material upon the manufacturing of resin.

Note that, in reuse, it is preferable to remove impurities contained in the decomposed product, and an impurity removal step may be performed upon the collection.

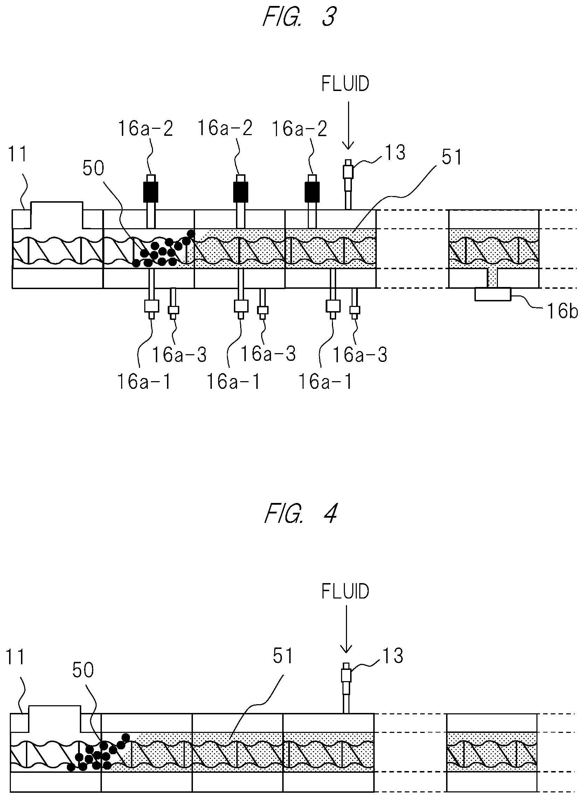

Next, the cooling step that is a distinctive step of the present embodiment will be explained. In the steps (a) through (e) above to be performed, the thermoplastic resin fed into the cylinder 12 has, for example, a granular pellet form so as to be easily handled, and then, is heated and pressurized to be melt-plasticized as described above after the feeding. At this time, as shown in FIG. 3, a solid pellet 50 supplied from the resin supplier 11 becomes semi-melted while being transported to the downstream side, and then, becomes the fully-melted molten resin 51.

At this time, if the pressure on the pellet 50 side and the pressure on the molten resin 51 side are balanced, the operation can be continued, and the decomposition can be performed efficiently. However, if this balance is lost to increase the pressure on the molten resin 51 side to be higher than the pressure on the pellet 50 side, the molten resin 51 flows back while pushing the pellet 50 back toward the resin supplier 11, and finally, the molten resin 51 and the pellet 50 in the mixed state may spout out of the resin supplier 11.

In the present embodiment, in order to suppress such a backflow, the outer circumference of the cylinder 12 has the cooling mechanism 16 as shown in FIG. 1. The cooling mechanism 16 is disposed on the outer circumference of the cylinder 12 between the resin supplier 11 and the fluid supplier 13, thereby preventing the excessive high internal temperature in the cylinder 12. In this case, the cooling mechanism 16 is preferably configured to cool the cylinder 12 to 3 to 130°C or the resin temperature in the cylinder 12 to 20 to 200°C. Because of such a temperature, the backflow can be effectively suppressed.

Here, in the cylinder 12 shown in FIG. 3, the cylinder block from the resin supplier 11 to the fluid supplier 13 may be provided with at least one measurement sensor selected from a resin thermometer, a resin pressure gauge, and a cylinder thermometer. In this case, the backflow can be also effectively suppressed by not operating the cooling mechanism 16 at the beginning of the operation of the decomposition apparatus but operating the cooling mechanism 16 at the time of detecting a sign of the occurrence of the backflow.

As the cylinder block provided with the measurement sensor, note that the cylinder block on the resin supplier 11 side, mostly including the pellet, is preferably provided therewith. In this manner, if there is a change in the numerical value in the cylinder block on the resin supplier 11 side measured by the measurement sensor, the occurrence of the backflow can be accurately detected, and then, a suppression operation by the cooling can be started.

For example, when the decomposition is continued in the state shown in FIG. 3 but the pressure on the molten resin 51 side increases to start the backflow of the molten resin toward the resin supplier 11 side as shown in FIG. 4, the change in the value measured by the measurement sensor is detected. If the occurrence of the backflow is determined because of the detection of the change, a controller connected to the measurement sensor operates the cooling mechanism 16 to cool the cylinder 12. By this, the pressure of the molten resin inside the cylinder 12 is decreased, thereby suppressing a situation of the backflow and the spout of the molten resin 51 together with the pellet 50 toward the resin supplier 11 side.

Note that, for the value measured by the measurement sensor, in order to control the operation of the cooling mechanism 16 by the controller, a threshold value based on the measured value may be set, or a threshold value based on the changed value obtained by monitoring its temporal change may be set. This threshold value may be appropriately set depending on the resin or fluid to be used, the conditions for decomposition or the like.

In the case of the decomposition using polyamide resin as the thermoplastic resin to be decomposed and water as the fluid to be supplied, as the threshold value based on the measured value to be exemplified, for example, 50 to 225°C may be set for the resin temperature, 1 to 8 MPa may be set for the resin pressure, and 25 to 250°C may be set for the cylinder temperature. As the threshold value based on the changed value to be exemplified, for example, 5 to 30% may be set for the resin temperature, 5 to 30% may be set for the resin pressure, and 5 to 30% may be set for the cylinder pressure.

### <Operation of Decomposition Apparatus>

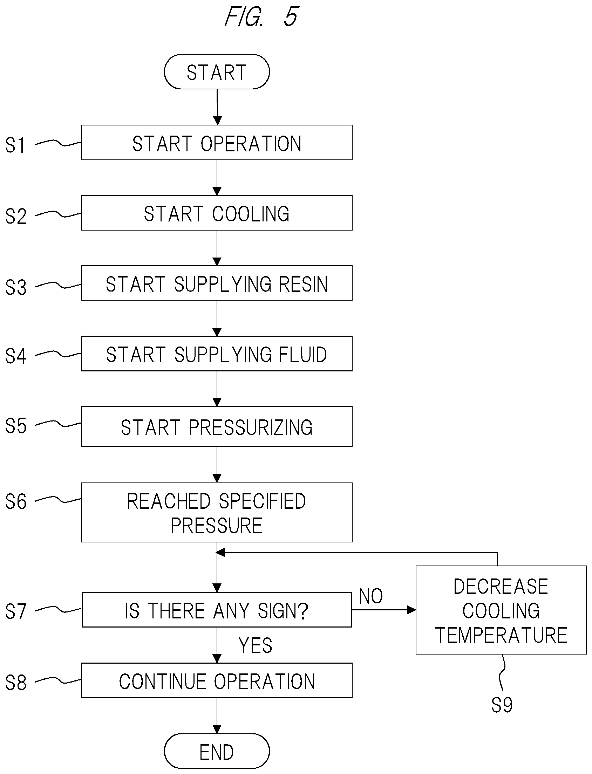

The decomposition apparatus and the decomposition method for resin according to the present embodiment have been explained above. A series of operations of the decomposition apparatus for resin 10 will be explained with reference to the flowchart in FIG. 5.

First, the decomposition apparatus for resin 10 is activated, and the operation is started (S1). By the start of the operation, the cylinder 12 is heated to a predetermined temperature, and the driving of the screw 12a is also started. Next, the cooling of the cylinder 12 by the cooling mechanism 16 is started (S2).

The supply of the pellet 50 as the resin to be decomposed to the resin supplier 11 is started (S3). After confirming the sufficient resin melting/plasticization and the transportation in the cylinder 12, the supply of the heated and pressurized fluid from the fluid supplier 13 is started (S4).

Furthermore, the pressurization is started to set the pressure in the cylinder 12 to a predetermined pressure (S5). Then, after confirming that the pressure has reached the specified pressure (S6), the resin decomposition is started. After the start of the operation of the decomposition, it is confirmed whether there is any backflow sign (S7). If there is no backflow sign, the operation is continued (S8). If there is any backflow sign, the cooled temperature of the cylinder 12 by the cooling mechanism 13 is lowered, and this procedure is repeated until no backflow sign is observed (S9).

Since the cylinder 12 is always cooled by the cooling mechanism 16, the pressure on the resin supplier 11 side is not excessively decreased, and therefore, the backflow can be suppressed (prevented). The operation is still continued until the end of all the decompositions for resin. At the time of the end of all, the decomposition apparatus is stopped.

### [Safety Hopper]

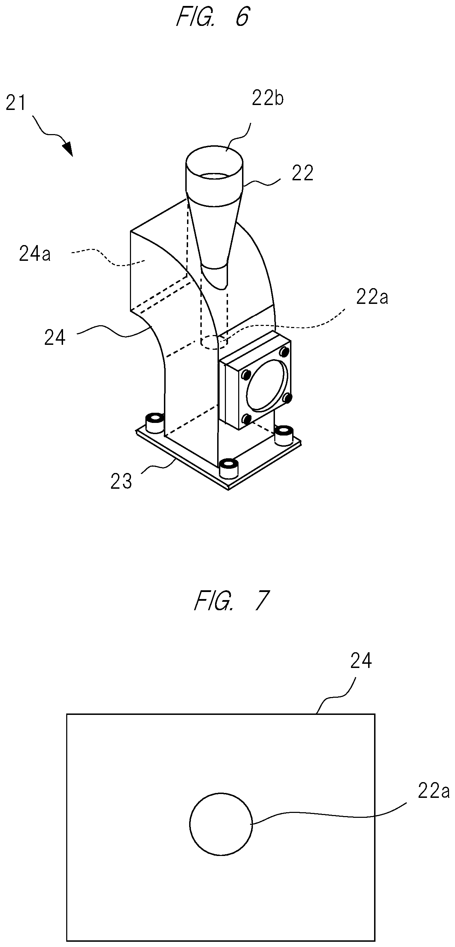

Note that the decomposition apparatus for resin 10 explained above may be provided with a safety holler in order to suppress influence of the occurrence of the backflow, if happened, on an operator in surroundings or the like. The safety hopper to be exemplified is, for example, a safety hopper 21 as shown in FIG. 6.

The safety hopper 21 is configured to include: a resin feeding port 22; a connecting structure 23 to be connected to the resin supplier 11; and a cover 24 including a lower-end opening 22a of the resin feeding port 22 therein, covering a periphery of the lower-end opening 22a of the resin feeding port 22 from the connecting structure 23, and having an opening at a different position from that of an upper-end opening 22b of the resin feeding port 22.

The resin feeding port 22 is a member configured to guide the resin fed to the resin supplier 11 at the time of the feeding of the resin. For example, the resin such as the pellet is moved downward by force of gravity after being fed from the upper-end opening 22b of the resin feeding port 22, passes through the lower-end opening 22a, and is further moved downward by falling or the like, and therefore, the resin is supplied to the resin supplier 11. In this case, the lower-end opening 22a is preferably positioned to be vertically above the opening of the resin supplier 11 to which the resin is supplied.

The resin vertically falls downward, and the connecting structure 23 is a member connecting and fixing the resin supplier 11 with the safety holler 21, and is arranged and fixed at a periphery of the opening of the resin supplier 11 to which the resin is supplied. This connecting structure 23 has an opening hole corresponding to the opening of the resin supplier 11, and is configured to reliably supply, to the resin supplier 11, the resin having been fed from the resin feeding port 22.

The cover 24 is a member covering the periphery of the lower-end opening 22a of the resin feeding port 22 from the connecting structure 23 and having an opening 24a at a position different from that of the upper-end opening 22b of the resin feeding port 22.

The lower-end opening 22a of the resin feeding port 22 is disposed inside the cover 24 while the upper-end opening 22b of the same is not disposed therein. In other words, in the safety hopper, the upper-end opening 22b is exposed to outside while the lower-end opening 22a is not exposed thereto. In this manner, the resin can be easily fed from the upper-end opening 22b, and the fed resin can be reliably supplied to the resin supplier 11 through the inside of the cover 24.

Because of the cover 24, the fed resin can be prevented from spilling over, and all of the fed resin can be supplied to the resin supplier 11, and therefore, the loss of the process-target resin or the like can be suppressed.

The safety hopper 21 is disposed on purpose for preventing the influence and the damage of the backflow on the operator or the like even if the molten resin 51 flows back from the decomposition apparatus for resin 10.

If the molten resin 51 flows back and spouts out from the decomposition apparatus for resin 10, the molten resin 51 forcefully spouts out from the opening of the resin supplier 11 while pushing back the pellet 50 toward the resin supplier 11. At this time, in a case without the safety hopper 21, the molten rein 51 or the like adversely spouts out upward from the opening of the resin supplier 11. Since a feeder or the like for the resin supply is generally disposed on an upper side of such spout, the spout affects the resin supply operation. Also, if there is the operator around it, the molten resin spouting out upward may spread around the resin supplier 11, and the operator may receive the damage such as burn injury.

On the other hand, in a case with the safety hopper 21, even if the molten resin 51 spouts out, the molten resin 51 can be guided by the cover 24 to spout toward a direction of the opening 24a of the cover 24. In other words, a spout direction of the molten resin 51 can be controlled to an optional direction.

The opening direction of the opening 24a of the cover 24 is preferably set to a different opening direction of the resin feeding port 22 such as a horizontal direction or a downward direction. In this manner, the influence of the spout of the molten resin 51 on the outside can be suppressed by setting the opening direction to be toward a space where the operator does not enter, or by disposing, in the opening direction, a plate or a fence for preventing the spreading. In this case, the resin feeding port 22 and the opening 24a are preferably disposed so that their opening directions are perpendicular to each other.

In order to suppress the influence of the spout of the molten resin 51, an area of the cover 24 (excluding an area of the lower-end opening 22a) in a horizontal surface of the lower-end opening 22a of the resin feeding port 22 is preferably larger than an area of the lower-end opening 22a therein.

FIG. 7 is a diagram for explaining a relation in size between the lower-end opening 22a and the cover 24 at a cross-sectional surface on the horizontal surface of the lower-end opening 22a. The area of the cover 24 (excluding the area of the lower-end opening 22a) described here is preferably three times the area of the lower-end opening 22a or larger, more preferably four times the area or larger, even more preferably eight times the area or larger, and particularly preferably sixteen times the area or larger.

When the relation between the area of the lower-end opening 22a and the area of the cover 24 is the predetermined relation as described above, even if the molten resin 51 flows back and spouts out, the spout of the molten resin 51 is preferably guided by not the resin feeding port 22 but the cover 24.

In the foregoing, the present invention has been concretely described on the basis of the embodiments and examples. However, it is needless to say that the present invention is not limited to the foregoing embodiments and examples, and various modifications can be made within the scope of the present invention.

### EXPLANATION OF REFERENCE CHARACTERS

10 Decomposition apparatus for resin
11 Resin supplier
12 Cylinder
12a Screw
12b Fluid supply hole
13 Fluid supplier
14 Extruder
15 Rotary drive mechanism
16 Cooling mechanism

## Claims

1. A decomposition method for resin, comprising steps of:
(a) heating and pressurizing and then melt-plasticizing a thermoplastic resin in a cylinder;
(b) after the step (a), mixing a heated and pressurized fluid with the thermoplastic resin;
(c) after the step (b), decomposing the thermoplastic resin by exposing the thermoplastic resin to a subcritical state or a supercritical state by the fluid; and
(d) extruding a decomposed product of the thermoplastic resin obtained in the step (c) from an extruder of the cylinder while cooling the cylinder with a coolant.

2. The decomposition method for resin according to claim 1,
wherein, in the step (b), the heated and pressurized fluid is supplied to the cylinder while being in the subcritical state or the supercritical state.

3. The decomposition method for resin according to claim 1,
wherein the cooling by the coolant is started at the same time with the step (a) or before the step (a).

4. The decomposition method for resin according to claim 1,
wherein the cooling by the coolant is started in response to a measurement value obtained by measuring at least one selected from a temperature of the thermoplastic resin, a pressure of the thermoplastic resin and a temperature of the cylinder in the step (a).

5. The decomposition method for resin according to claim 1,
wherein a temperature of the cylinder is brought to be equal to or lower than 150°C by the cooling.

6. The decomposition method for resin according to claim 1,
wherein a temperature of the coolant is 0.5 to 50°C.

7. The decomposition method for resin according to claim 6,
wherein the coolant is a coolant circulated in and supplied to an outer circumference of the cylinder.

8. The decomposition method for resin according to claim 1,
wherein the thermoplastic resin is a polyamide resin.

9. A decomposition apparatus for resin, comprising:
a cylinder;
a screw disposed in the cylinder and being capable of kneading and transporting a thermoplastic resin;
an extruder provided to the cylinder and configured to extrude a decomposed product of the thermoplastic resin to outside of the cylinder; and
a cooling mechanism configured to cool the cylinder.

10. The decomposition apparatus for resin according to claim 9,
wherein the cooling mechanism is configured to circulate a coolant in an outer circumference of the cylinder.

11. The decomposition apparatus for resin according to claim 9,
wherein the cylinder provided between the resin supplier and the fluid supplier includes at least one selected from a resin thermometer for measuring a temperature of the thermoplastic resin, a resin pressure gauge for measuring a pressure of the thermoplastic resin and a cylinder thermometer for measuring a temperature of the cylinder, and
the decomposition apparatus includes a controller causing the cooling mechanism to start cooling in response to a change in a measurement value of the resin thermometer, the resin pressure gauge or the cylinder thermometer.

12. A decomposition apparatus for resin, comprising:
a cylinder including a resin supplier for supplying a thermoplastic resin;
a screw disposed in the cylinder and being capable of kneading and transporting the thermoplastic resin;
an extruder provided to the cylinder and configured to extrude a decomposed product of the thermoplastic resin to outside of the cylinder; and
a hooper disposed above the resin supplier,
wherein the hopper includes:
a cover covering the resin supplier and having an opening; and
a resin feeding port disposed above the cover, and
the opening and the resin feeding port are positioned in a different direction from each other.

13. The decomposition apparatus for resin according to claim 12,
wherein opening directions of the opening of the hopper and the resin feeding port are perpendicular to each other.

14. The decomposition apparatus for resin according to claim 12,
wherein the resin feeding port of the hopper is vertically above the resin supplier.

15. The decomposition apparatus for resin according to claim 12,
wherein, in a horizontal surface including a lower-end opening of the resin feeding port, an area of the cover (excluding an area of the lower-end opening) is three times the area of the lower-end opening or larger.
